# EUROPÄISCHE PATENTSCHRIFT

(11) **EP 0 529 288 B1**
(45) Veröffentlichungstag und Bekanntmachung des Hinweises auf die Patenterteilung: **14.12.1994**
(21) Anmeldenummer: 92112320.4
(22) Anmeldetag: 18.07.1992
(51) Int. Cl.: B60J 7/11, E05B 13/00, E05B 65/12

(54) **Dachanordnung für ein Kraftfahrzeug**
Roof arrangement for motor vehicle
Agencement de toit pour véhicule automobile

(30) Priorität: 28.08.1991 DE 4128460
(43) Veröffentlichungstag der Anmeldung: 03.03.1993
(73) Patentinhaber: WEBASTO KAROSSERIESYSTEME GmbH, D-82131 Stockdorf (DE)
(72) Erfinder: Fürst, Arpad, W-8034 Germering (DE); Reihl, Peter, W-8130 Starnberg 2 (DE)

(56) Entgegenhaltungen:
- EP-A- 0 410 683
- DE-A- 3 329 407
- DE-U- 9 105 583
- US-A- 3 603 636
- US-A- 4 367 454
- US-A- 4 548 434

## Beschreibung

Die Erfindung bezieht sich auf eine Dachanordnung für ein Kraftfahrzeug mit einem abnehmbaren Dachteil zum Freilegen einer Dachöffnung, mit wenigstens einer karosseriefesten Aufnahmeeinrichtung, in die ein fest mit dem abnehmbaren Dachteil verbundenes Stackteil einführbar ist, und mit einer einen Betätigungshebel umfassenden Verriegelungseinrichtung, welche in Entriegelungsstellung federbelastet ist und in der Verriegelungsstellung einen am abnehmbaren Dachteil vorgesehenen Sicherungszapfen sichert.

Aus DE-A-33 29 407 Al ist eine Dachanordnung für ein Kraftfahrzeug mit einer lösbaren Dachplatte der vorstehend genannten Art bekannt. Am Dachrahmen eines Kraftfahrzeugs sind am vorderen oder hinteren Querbereich des Dachrahmens zwei schwenkbare Hebel vorgesehen, welche Niederhaltefinger für den vorderen bzw. hinteren Bereich der Dachplatte tragen sowie mit Riegelleisten in Verbindung stehen, die längsverschiebbar an den Seitenbereichen des Dachrahmens geführt sind und Riegel tragen, denen in der Dachplatte Aufnahmen gegenüberstehen, in die die Riegel nur bei in ihre Arretierungsstellung geschwenkten Hebeln niederhaltend eingreifen. Bei dieser Dachanordnung werden durch zwei verschwenkbare Hebel alle Schnellverschlüsse in ihrer Verriegelungsstellung bzw. ihrer Freigabestellung zum Abheben der Dachplatte gebracht. Die beiden Schwenkhebel sind vom Fahrzeuginnenraum her oder bei geöffneter Heckklappe betätigbar. Die Schwenkhebel lassen sich unabsichtlich während der Fahrt betätigen oder die nicht vollständige geschlossene Heckklappe bleibt unbemerkt, wodurch die Gefahr hervorgerufen wird, daß sich das abnehmbare Dachteil während der Fahrt öffnet, vom Fahrtwind mitgerissen und vom Fahrzeug weggeschleudert wird. Hierdurch ergibt sich eine erhebliche Unfallgefahr.

In US-A-4 367 454 ist eine Verriegelungs- und Entriegelungseinrichtung für ein abnehmbares Dachteil an einem Fahrzeug angegeben, die etwa im Bereich der Mitte in Querrichtung angeordnet ist und zur zentralen Verriegelung und Entriegelung aller vorgesehenen Schließriegel für das abnehmbare Dachteil bestimmt ist. Der zentral angeordnete Betätigungshebel ist vom Innenraum des Fahrzeugs her zugänglich. Zur Diebstahlsicherung arbeitet diese zentrale Verriegelungs- und Entriegelungseinrichtung mit einer Fahrzeugwarnanlage derart zusammen, daß einerseits bei einer Entriegelung ein Alarm ausgelöst und zugleich die Verriegelungskräfte verstärkt werden. Auch bei dieser Auslegung ist eine Betätigung des Betätigungshebels bei fahrendem Fahrzeug möglich, so daß sich hieraus wie voranstehend angegeben eine erhebliche Verkehrsgefährdung ergeben kann.

Aus EP-A-0 410 683 ist ein Verriegelungssystem für ein abnehmbares Dachteil bekannt, welches motorisch betreibbar ist. Um im Notfall, d.h. bei gestörtem motorischem Antrieb, eine Ver- und Entriegelung auch auf manuelle Weise zu verwirklichen, sind hierbei mechanisch beaufschlagbare Einrichtungen vorgesehen, welche eine Abkopplung des motorischen Antriebs und dann eine manuelle Notbetätigung gestatten. Diese Notbetätigung ist selbstverständlich ebenfalls derart angeordnet, daß sie im Bedarfsfall leicht zugänglich für eine Handbetätigung ist. Daher treten auch bei einem derartigen Verriegelungssystem die voranstehend angegebenen Schwierigkeiten auf.

Aus DE-U-78 11 943 ist ein Personenkraftwagen, insbesondere ein mehrsitziger Sportwagen, bekannt, welcher einen mit der Karosserie fest verbundenen Überrollbügel hat. Am Überrollbügel ist eine Haltevorrichtung vorgesehen, welche das abnehmbare Dachteil in einer Ausstellstellung zu Belüftungszwecken arretieren kann. Hierzu ist ein Halteglied beim Hochstellen des Dachteils in Verstellrichtung in einer vorbestimmten Stellung relativ zu einer Riegelaufnahme feststellbar, in welcher der Riegel mit einer der Riegelausnehmungen des Halteglieds fluchtet. Hierdurch wird eine Belüftung des Karosserieinnenraums über das Dach ermöglicht, ohne daß das abnehmbare Dachteil entfernt zu werden braucht. Die Haltevorrichtung ist vom Fahrzeuginnenraum her betätigbar, so daß das abnehmbare Dachteil kurzfristig in seine Schließstellung überführt werden kann, wenn dies beispielsweise bei stärker einsetzendem Regen notwendig werden sollte. Daher ergeben sich auch bei dieser Konstruktion die eingangs erwähnten Schwierigkeiten.

Aus US-A-3 603 636 ist ein Fahrzeug mit einem abnehmbaren Dachteil bekannt, welches Verriegelungseinrichtungen hat, die im abnehmbaren Dachteil untergebracht sind. Die die Verriegelungseinrichtungen und die Verriegelungsteile beaufschlagenden Hebel, wie Lösehebel o.dgl., sind ebenfalls im abnehmbaren Dachteil untergebracht und können vom Fahrzeuginnenraum aus betätigt werden. Daher ist auch bei diesem Fahrzeug mit abnehmbarem Dachteil keine Sicherung gegen ein unbeabschtigtes Lösen während der Fahrt gegeben, und zudem ist das abnehmbare Dachteil relativ schwer, da in ihm die Ver- und Entriegelungseinrichtungen mit den zugeordneten Betätigungseinrichtungen untergebracht werden müssen.

Aus DE-U-91 05 583.0 ist eine Befestigungsvorrichtung für ein herausnehmbares Dachteil eines Personenkraftwagens bekannt, welche einen Betätigungshandgriff umfaßt, welcher von der Fahrzeuginnenseite her zugänglich ist und in einer von der Rasthalterung des herausnehmbaren Dachteils bewegungsmäßig abgekoppelten Stellung zugleich als ein Haltegriff nutzbar ist. Dieses Betätigungsgriffteil hat einen Auslöseknopf, welcher ergonomisch am Handgriff so angeordnet ist, daß seine Zugänglichkeit erst bei geöffneter Fahrzeugtür gegeben und damit die Sicherheit für einen zuverlässigen Verschluß in der Verriegelungsstellung gewährleistet ist. Hierbei wird somit ein zusätzlicher Auslöseknopf als Sicherungseinrichtung benötigt, welcher zusätzlich betätigt werden muß, so daß man nicht nur eine komplizierte Handhabung, sondern auch eine komplizierte Auslegung einer Verriegelungseinrichtung erhält. Ferner ist bei dieser Auslegung eine unbeabsichtigte Entriegelung und/oder Verriegelung bei fahrendem Fahrzeug nicht ausgeschlossen, sondern mit Hilfe des Auslöseknopfs wird diese lediglich eingeschränkt.

Die Erfindung zielt darauf ab, unter Überwindung der zuvor geschilderten Schwierigkeiten, eine Dachanordnung für ein Kraftfahrzeug mit einem abnehmbaren Dachteil der gattungsmäßen Art bereitzustellen, bei welchem zur Erhöhung der Verkehrssicherheit eine Entriegelung und/oder Verriegelung bei fahrendem Fahrzeug ausgeschlossen wird.

Nach der Erfindung zeichnet sich hierzu eine Dachanordnung für ein Kraftfahrzeug mit einem abnehmbaren Dachteil zum Freilegen einer Dachöffnung, mit wenigstens einer karosseriefesten Aufnahmeeinrichtung, in die ein fest mit dem abnehmbaren Dachteil verbundenes Steckteil einführbar ist, und mit einer einen Betätigungshebel umfassenden Verriegelungseinrichtung, welche in Entriegelungsstellung federbelastet ist und in der Verriegelungsstellung einen am abnehmbaren Dachteil vorgesehenen Sicherungszapfen sichert, dadurch aus, daß der karosseriefest am Fahrzeugrahmen angeordnete Betätigungshebel nur zugänglich ist, wenn wenigstens ein eine Fahrzeugseitenöffnung verschließendes Teil in seiner Offenstellung ist und sich das eine Fahrzeugöffnung verschließende Teil nur in seine Schließstellung bringen läßt, wenn die Verriegelungseinrichtung in ihrer vorbestimmten Verriegelungsstellung ist.

Bei der erfindungsgemäßen Dachanordnung wird somit der wenigstens eine Betätigungshebel zum Ent- und Verriegeln des abnehmbaren Dachteils derart am Kraftfahrzeug vorgesehen, daß er bei fahrendem Fahrzeug nicht betätigt werden kann. Der wenigstens eine Betätigungshebel ist bei der erfindungsgemäßen Dachanordnung nämlich erst zur Betätigung zugänglich, wenn wenigstens ein eine Fahrzeugseitenöffnung verschließendes Teil in seiner Offenstellung ist. Wenn dieses Teil aber seine Offenstellung einnimmt, so befindet sich das Fahrzeug normalerweise im Stillstandszustand. Somit kann bei der erfindungsgemäßen Dachanordnung auf konstruktiv einfache Weise wirksam eine Verkehrsgefährdung durch ein unbeabsichtigtes Entsichern eines abnehmbaren Dachteils vermieden werden. Hierdurch wird die Verkehrssicherheit bei Kraftfahrzeugen mit einer Dachanordnung mit einem abnehmbaren Dachteil in erheblichem Maße verbessert. Bei dem abnehmbaren Dachteil der Dachanordnung für ein Kraftfahrzeug nach der Erfindung kann es sich um ein Hardtopoberteil, ein Einsatzdach, ein Cabrioverdeck oder dergleichen handeln.

Ferner wird hierdurch erreicht, daß sich die Fahrzeugseitenöffnung, insbesondere die Fahrzeugtüre, nach dem Aufsetzen des abnehmbaren Dachteils nur dann schließen läßt, wenn der Betätigungshebel jene Stellung einnimmt, bei der die Verriegelungseinrichtung in ihrer vorbestimmten Verriegelungsstellung ist. In allen anderen Zwischenstellungen wird der Fahrzeugbenutzer an einem Schließen der zugeordneten Fahrzeugseitenöffnung gehindert, so daß er zwangsweise hierdurch gewarnt wird, daß die Verriegelungseinrichtung nicht ordnungsgemäß in ihrer Verriegelungsstellung ist. Durch diese Auslegung wird somit zur weiteren Erhöhung der Verkehrssicherheit sichergestellt, daß nach dem Aufsetzen des abnehmbaren Dachteils das Kraftfahrzeug nur gefahren werden kann, wenn die Verriegelungseinrichtung für das abnehmbare Dachteil in ihrer vorbestimmten, ordnungsgemäßen Verriegelungsstellung ist, so daß ein unbeabsichtigtes Lösen des abnehmbaren Dachteils durch eine nicht ordnungsgemäße Verriegelung desselben in seiner Schließstellung am Fahrzeug wirksam vermieden wird.

Vorzugsweise ist nach der Erfindung der Betätigungshebel am Fahrzeugrahmen im Bereich einer Fahrzeugtüre angeordnet, so daß der Betätigungshebel zur Betätigung und somit zur Verriegelung und Entriegelung des abnehmbaren Dachteils nur bei geöffneter Fahrzeugtüre beaufschlagt werden kann.

Bei einer Ausführungsform der Dachanordnung nach der Erfindung führt das Verriegelungsteil lediglich eine Längsbewegung aus. Dieses Verriegelungsteil ist im Dachholm im vorderen Bereich der Fahrertür beispielsweise beweglich geführt, wobei die Auslegung derart getroffen ist, daß die Fahrertür beispielsweise nur dann vollständig geschlossen werden kann, wenn das Verriegelungsteil in bestimmungsgemäßer Weise nach dem Aufsetzen des abnehmbaren Dachteils seine Verriegelungsstellung einnimmt.

Eine bevorzugte Ausführungsform einer Dachanordnung zeichnet sich dadurch aus, daß der Betätigungshebel über eine Hebelverbindung mit dem Verriegelungsteil derart verbunden ist, daß bei einer Drehbewegung des Betätigungshebels um seine Drehachse das Verriegelungsteil zur Verriegelung fit dem am abnehmbaren Dachteil vorgesehenen Sicherungszapfen eine Drehbewegung um eine Drehachse ausführt, die in einem Winkel zur Drehachse des Betätigungshebels liegt. Hierbei läßt sich der Betätigungskomfort dadurch verbessern, daß der Betätigungshebel eine relativ lang bemessene Betätigungshandhabe haben kann, und daß die Betätigungskräfte über die Hebelverbindung auf das Verriegelungsteil unter Kraftumlenkung übertragen werden.

Zweckmäßigerweise führt das Verriegelungsteil ausschließlich eine Drehbewegung um seine Drehachse aus. Daher braucht das Verriegelungsteil ausgehend von der Entriegelungsstellung bis zur Verriegelungsstellung nur einen kleinen Drehwinkel zurückzulegen, wodurch man eine kompakte Bauweise einer Verriegelungseinrichtung erhält, welche sich platzsparend im Dachholmbereich der Fahrzeugkarosserie beispielsweise unterbringen läßt. Ferner kann das Verriegelungsteil etwa senkrecht zur Achse des Sicherungszapfens mit diesem zusammenarbeiten, so daß man eine eindeutig definierte Verriegelungsstellung aus Sicherheitsgründen erreicht.

Die Hebelverbindung läßt sich bei dieser Ausführungsform der Dachanordnung zweigliedrig oder eingliedrig auslegen. Bei einer zweigliedrigen Auslegung der Hebelverbindung ist ein Zwischenglied vorgesehen, welches ein das Verriegelungsteil tragendes Hebelglied derart beaufschlagt, daß das Hebelglied mit dem Verriegelungsteil in der Verriegelungsstellung gehalten ist. Das Zwischenglied und das das Verriegelungsteil tragende Hebelglied führen lediglich eine Drehbewegung um einen kleinen Winkelbereich aus.

Bei dieser zweigliedrigen Hebelverbindung ist das Zwischenglied vorzugsweise in Verriegelungsrichtung federbelastet, so daß das Verriegelungsteil in eine definierte Verriegelungsstellung durch die Federkraftbeaufschlagung über das Zwischenglied gebracht wird.

Vorzugsweise führt hierbei das Zwischenglied eine translatorische Bewegung aus. Diese translatorische Bewegung des Zwischengliedes wird von dem Betätigungshebel bei dessen Drehbewegung um seine Achse übertragen.

Gemäß einer alternativen Ausführungsform kann das Zwischenglied eine Drehbewegung um eine etwa zur Verriegelungselement-Drehachse parallele Drehachse ausführen. Bei einer derartigen Auslegung einer zweigliedrigen Hebelverbindung läßt sich die Länge derselben verkürzen, um günstigere Einbauverhältnisse insbesondere im Dachholmbereich zur Unterbringung der Hebelverbindung zu haben.

Eine bevorzugte Ausführungsform dieser zweigliedrigen Hebelverbindung zeichnet sich dadurch aus, daß der Betätigungshebel L-förmig ausgebildet ist und der kürzere Schenkel des L einen Zapfen trägt, welcher in ein Langloch im Zwischenglied eingreift und das Zwischenglied in Verriegelungsrichtung oder Entriegelungsrichtung beaufschlagt. Bei dieser Verriegelungseinrichtung hat die Betätigungshandhabe des Betätigungshebels eine relativ große Längserstreckung, so daß er leicht bedienbar ist. Hierdurch wird im wesentlichen erreicht, daß geringere Betätigungskräfte zur Verbesserung des Bedienungskomforts erforderlich sind.

Eine bevorzugte Ausführungsform einer eingliedrigen Hebelverbindung zeichnet sich dadurch aus, daß das Hebelverbindungsglied einerseits das Verriegelungsteil trägt und andererseits über eine Wälzverbindung mit dem Betätigungshebel derart zusammenarbeitet, daß bei einer Drehbewegung des Betätigungshebels um seine Drehachse dieser das Hebelverbindungsglied zur Ausführung einer Drehbewegung um seine Hebelverbindungsglied-Drehachse in Verriegelungsrichtung beaufschlagt. Diese Version einer eingliedrigen Hebelverbindung umfaßt sehr wenige Bauteile, um den Montageaufwand zu reduzieren und zudem ist diese Verriegelungseinrichtung äußerst flachbauend ausgelegt. Zum Zusammenarbeiten des Betätigungshebels mit dem Hebelverbindungsglied ist zweckmäßigerweise ein Kurvenkörper an dem zugeordneten Ende des Betätigungshebels ausgebildet, welcher durch die Abwälzbewegung die Drehbewegung des Betätigungshebels um seine Achse in eine Drehbewegung des Hebelverbindungsgliedes mit dem Verriegelungsteil umwandelt.

Als Verriegelungsteil ist zweckmäßigerweise eine Nockenfläche vorgesehen, welche den am abnehmbaren Dachteil vorgesehenen Sicherungszapfen in die Verriegelungsstellung bringt, wobei in geführter Weise noch eine Andrückbewegung dem abnehmbaren Dachteil bis zur Einnahme der Verriegelungsstellung erteilt wird, um einen entsprechenden Anpreßdruck auf die zugeordneten, elastisch nachgiebigen Dichtungsteile auszuüben.

Eine alternative Ausführungsform einer Hebelverbindung zeichnet sich dadurch aus, daß die Hebelverbindung ein Exzenterverbindungsglied aufweist. Hierzu kann das Hebelverbindungsglied einen Exzenteransatz haben, welcher über eine Verbindungsstange und Öffnungen mit dem Betätigungshebelende verbunden ist. Über das Exzenterverbindungsglied läßt sich eine Kraftverstärkung gegenüber der auf den Betätigungshebel auszuübenden Betätigungskraft auf äußerst platzsparende Weise erzielen.

Vorzugsweise wird das Verriegelungsteil von einem Gabelende des Hebelverbindungsgliedes gebildet, welches derart beschaffen und ausgelegt ist, daß es wenigstens teilweise den Sicherungszapfen umgreift, der am abnehmbaren Dachteil angebracht ist. Hierdurch wird der Sicherungszapfen zuverlässig in der Verriegelungsstellung der Verriegelungseinrichtung vorzugsweise mittels Formschluß gehalten, so daß auch Schwingungsbelastungen des Fahrzeugs während der Fahrt nicht zu einem teilweise Lösen der Verriegelung führen.

Vorzugsweise ist das abnehmbare Dachteil in Öffnungsrichtung federvorbelastet an der Karosserie abgestützt, so daß in der Entriegelungsstellung der Verrieglungseinrichtung das abnehmbare Dachteil durch die Federkraftunterstützung geringfügig von der Anlageberührung an den Dichtungen abgehoben wird und sich dann leicht insgesamt von der Karosserie abnehmen läßt.

Vorzugsweise ist jeder Längsseite des abnehmbaren Dachteils wenigstens eine Verriegelungseinrichtung zugeordnet. Natürlich können jeder Längsseite auch mehrere Verriegelungseinrichtungen zugeordnet werden oder gegebenenfalls können auch den Querseiten entsprechende Verriegelungseinrichtungen zugeordnet werden. Um jedoch den Abnahmevorgang und die Verriegelung des abnehmbaren Dachteils zu vereinfachen, sollten zweckmäßigerweise möglichst wenige Verriegelungseinrichtungen angeordnet werden oder es sollten die Verriegelungseinrichtungen einer Längsseite und/oder einer Querseite untereinander bewegungsgekoppelt sein, so daß man mit möglichst wenigen Handgriffen das abnehmbare Dachteil entregeln und verriegeln kann.

Bei einer alternativen Ausführungsform einer Dachanordnung für ein Kraftfahrzeug der gattungsgemäßen Art ist der Betätigungshebel durch ein howdenzugförmiges Verbindungsteilmit der wenigstens einen Verriegelungseinrichtung verbunden. Bei dieser Auslegung kann der Betätigungshebel an der vorbestimmten Stelle, vorzugsweise im Türbereich des Fahrzeugrahmens angeordnet werden, während die Verriegelungseinrichtung oder die Verriegelungseinrichtungen sich an entsprechend geeigneten Stellen des Dachbereichs vorsehen läßt oder lassen.

Gemäß einer zweckmäßigen Ausgestaltungsform ist nur eine Verriegelungseinrichtung vorgesehen, welcher einer Querseite des abnehmbaren Dachteils zugeordnet ist, während der Betätigungshebel im Türbereich des Fahrzeugrahmens angeordnet ist. Bei dieser Auslegung wird also durch die körperliche Anordnung des Betätigungshebels eine Fehlbedienung bei fahrendem Fahrzeug ausgeschlossen und zur Vereinfachung der Konstruktion wird eine entsprechende Verriegelungseinrichtung der Querseite zugeordnet.

Vorzugsweise ist hierbei die Auslegung derart getroffen, daß über den Betätigungshebel und das bowdenzugförmige Teil die Verriegelungseinrichtung in ihre Entriegelungsstellung bringbar ist, während die Verriegelungseinrichtung ohne Hebelbetätigung in ihre Verriegelungsstellung bringbar ist, wozu beispielsweise das abnehmbare Dachteil nach seiner vorbestimmten Positionierung im Dachbereich der Fahrzeugkarosserie niedergedrückt wird, bis die Verriegelungseinrichtung in ihre Verriegelungsstellung gelangt ist.

Vorzugsweise umfaßt die Verriegelungseinrichtung ein Verriegelungsteil mit einer gabelförmigen Aussparung, welche das dachseitige Sicherungsglied in der Verriegelungsstellung umgreift, und das eine Drehbewegung um eine zur Ebene des Verriegelungsteils senkrechte Achse zur Veroder Entriegelung ausführt. Hierdurch kann man eine platzsparende und in zwei zueinander senkrechten Ebenen wirkende Auslegung einer Verriegelungseinrichtung verwirklichen.

Um zusätzlich das Verriegelungsteil in seiner Verriegelungsstellung zu sichern, ist vorzugsweise eine Sperrklaue vorgesehen, welche mit dem Verriegelungsteil derart zusammenarbeitet, daß das Verriegelungsteil in seiner das Sicherungsglied niederhaltenden Verriegelungsstellung formschlüssig verrastet ist. Hierdurch wird auch erreicht, daß sich die Verriegelungseinrichtung nicht durch Stoß- oder Schwingungsbeanspruchungen selbsttätig entriegeln kann.

Vorzugsweise ist das bowdenzugförmige Teil mit der Sperrklaue verbunden, so daß bei der Beaufschlagung des Betätigungshebels der Verrastungseingriff mit dem Verriegelungsteil durch Abrücken der Sperrklaue mittels des bowdenzugförmigen Teils aufgehoben wird.

Vorzugsweise ist hierbei die Sperrklaue in ihrer Verrastungsstellung federbelastet. Zweckmäßigerweise ist die Verriegelungseinrichtung ähnlich einer Motorhaubenverriegelung ausgelegt.

Die Erfindung wird nachstehend anhand von bevorzugten Ausführungsformen unter Bezugnahme auf die beigefügte Zeichnung lediglich beispielhaft näher erläutert. Darin zeigt:
- Fig. 1: eine perspektivische auseinandergezogene Darstellung von abnehmbarem Dachteil und einem schematisch angedeuteten Fahrzeug zur Verdeutlichung der erfindungsgemäßen Dachanordnung,
- Fig. 2: eine Schnittansicht etwa längs der Linie II-II in Fig. 1 zur Verdeutlichung einer ersten Ausführungsform einer Verriegelungseinrichtung, welche im Dachholm des vorderen Bereichs der Fahrertür untergebracht ist,
- Fig. 3: eine Schnittansicht entsprechend der Linie II-II in Fig. 1 zur Verdeutlichung einer Ausführungsvariante einer Verriegelungseinrichtung mit einer zweigliedrigen Hebelanordnung,
- Fig. 4: eine Draufsicht auf die Anordnung der Verriegelungseinrichtung nach Fig. 3,
- Fig. 5: eine Schnittansicht längs der Linie II-II in Fig. 1 zur Verdeutlichung einer Ausführungsform einer Verriegelungseinrichtung mit einer eingliedrigen Hebelverbindungseinrichtung,
- Fig. 6: eine Draufsicht auf die Anordnung der Verriegelungseinrichtung nach Fig. 5,
- Fig. 7: eine Draufsicht einer weiteren Ausführungsform einer Verriegelungseinrichtung mit einer Hebelverbindungseinrichtung,
- Fig. 8: eine perspektivische Ansicht einer alternativen Ausführungsform einer Dachanordnung nach der Erfindung,
- Fig. 8a: eine perspektivische Schnittansicht im Bereich A von Fig. 8, und
- Fig. 8b: eine perspektivische Schnittansicht im Bereich B von Fig. 8.

In den Figuren der Zeichnung sind gleiche oder ähnliche Teile mit denselben Bezugszeichen versehen.

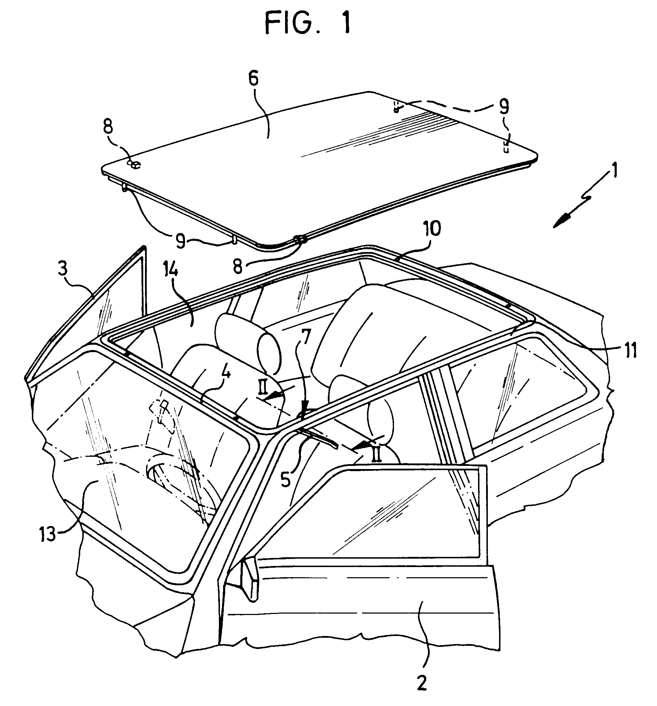

In Fig. 1 ist in einer perspektivischen Ansicht schematisch ein insgesamt mit 1 bezeichnetes Kraftfahrzeug dargestellt. Die Fahrertür des Kraftfahrzeugs 1 ist min 2 und die Beifahrertür mit 3 bezeichnet. Sie sind in teilweise geöffneter Stellung in Fig. 1 dargestellt. Ein Dachholm 4 erstreckt sich von dem vorderen Bereich der Fahrertür 2 zu dem vorderen Bereich der Beifahrertür 3. Wie schematisch angedeutet, ist im Bereich des Türrahmens ein Betätigungshebel 5 angeordnet, welcher zur Entriegelung und Verriegelung eines im abgenommenen Zustand in Fig. 1 dargestellten, abnehmbaren Dachteils 6 bestimmt ist. Dieser Betätigungshebel 5 ist einer in den nachstehenden Figuren anhand von bevorzugten Ausführungsformen näher erläuterten Verriegelungseinrichtung 7 zugeordnet. Am abnehmbaren Dachteil 6 sind ein oder mehrere Sicherungszapfen 8 fest angebracht. Diese Sicherungszapfen 8 werden bei aufgesetztem, abnehmbarem Dachteil 6 mit Hilfe der Verriegelungseinrichtung 7 zu Sicherungszwecken verriegelt. Ferner sind am abnehmbaren Dachteil 6 Zentrierstifte 9 fest angebracht, welche in Lagerbuchsen 10 eingreifen, die in der festen Dachfläche 11 vorgesehen sind. Beim Aufsetzen des abnehmbaren Dachteils 6 wird das abnehmbare Dachteil 6 in Verbindung mit den Zentrierstiften 9 und den Lagerbuchsen 10 bezüglich der festen Dachfläche 11 und auch bezüglich der Verriegelungseinrichtung 7 ausgerichtet, um das Aufsetzen und das Anbringen des abnehmbaren Dachteiles 6 zu erleichtern. Zweckmäßigerweise sind im Bereich der Lagerbuchsen 10 und/oder der Aufnahmeeinrichtungen für den Sicherungszapfen 8 Federn 12 angeordnet, welche bei entriegelter Verriegelungseinrichtung 7 das abnehmbare Dachteil 6 in Öffnungsrichtung vorbelasten.

Wenn entsprechend der Anordnung nach Fig. 1 die Betätigungseinrichtung bzw. der Betätigungshebel 5 sich nicht in dem eng am Rahmenbereich der Fahrertür 2 anliegenden Zustand befindet, kann die Fahrertür 2 nicht vollständig geschlossen werden. Diese eng anliegende Stellung nimmt der Betätigungshebel 5 bei aufgesetztem Dachteil 6 nur dann ein, wenn die Verriegelungseinrichtung 7 in ihrer vorbestimmten Verriegelungsstellung ist und der Sicherungszapfen gesichert ist. Wenn dann zum Losfahren die Fahrertür 2 geschlossen wird, ist der Betätigungshebel 5 nicht mehr zugänglich und die Verriegelungseinrichtung 7 kann während der Fahrt nicht entriegelt werden. Falls die Verriegelungseinrichtung 7 nicht in ihrer vorbestimmten Verriegelungsstellung ist, kann die Fahrertür 2 nicht geschlossen werden, da der Betätigungshebel 5 vom Türrahmen des Kraftfahrzeugs 1 vorsteht. Das Schloß der Fahrertür 2 kann dann nicht einrasten. Durch diese Anordnung der Verriegelungseinrichtung 7 und des Betätigungshebels 5 derselben kann ein unbeabsichtigtes Entriegeln während der Fahrt vermieden werden und zudem ist noch eine Kontrolle über das Schließen der Fahrertür 2 möglich, ob die Verriegelungseinrichtung 7 in ihrer vorbestimmten Verriegelungsstellung ist oder nicht.

In den Figuren ist die Seitenscheibe des Kraftfahrzeugs 1 mit 13 bezeichnet.

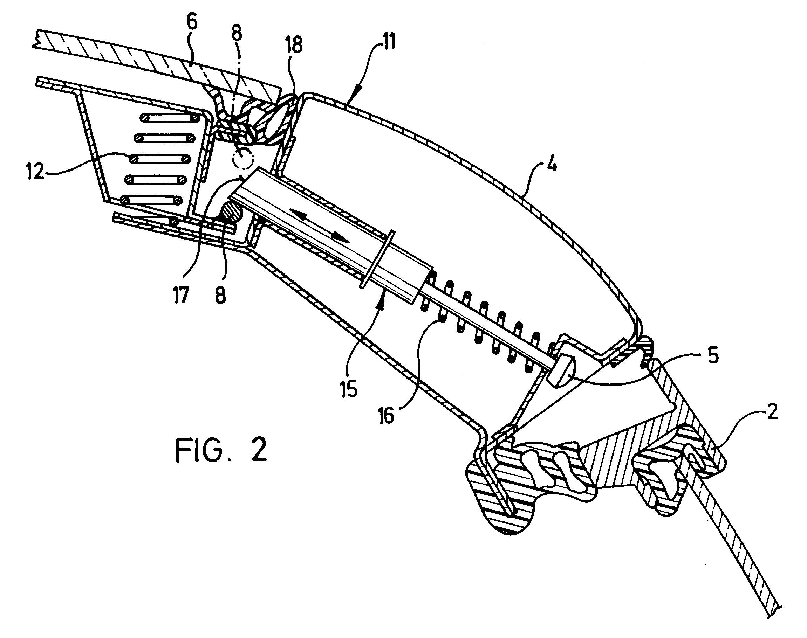

In Fig. 2 ist eine erste Ausführungsform einer insgesamt mit 7 bezeichneten Verriegelungseinrichtung gezeigt, die im Dachholm 4 des vorderen Bereichs der Fahrertür 2 angeordnet ist. Die Verriegelungseinrichtung 7 hat ein entsprechend den Pfeilen nur längsbewegliches Verriegelungsteil 15, welches in Form einer Riegelstange ausgelegt ist, die mittels einer Feder 16 in Richtung der in Fig. 2 gezeigten Verriegelungsstellung der Verriegelungseinrichtung 7 vorbelastet ist. Am abnehmbaren Dachteil 6 ist der stiftförmige Sicherungszapfen 8 befestigt. In gebrochener Linie ist in Fig. 2 der Sicherungszapfen 8 in der Lage dargestellt, die er einnimmt, wenn das abnehmbare Dachteil 6 mit Hilfe der Zentrierstifte 9 und der Lagerbuchsen 10 bezüglich der festen Dachfläche 11 ausgerichtet ist und federnd auf den Druckfedereinrichtungen 12 aufliegt. Das Verriegelungsteil 15 hat am vorderen Ende eine Schrägfläche 17, gegen welche der Sicherungszapfen 8 bei lediglich aufgesetztem Dachteil 6 zur Anlage kommt. Nunmehr wird das abnehmbare Dachteil 6 in Richtung zur festen Dachfläche 11 niedergedrückt, wodurch der Sicherungszapfen 8 das Verriegelungsteil 15 entgegen der Wirkung der Kraft der Feder 16 bewegt, bis der Sicherungszapfen 8 die in durchgezogener Linie in Fig. 2 gezeigte Stellung einnimmt. Nunmehr drückt die Feder 16 das Verriegelungsteil 15 derart, daß es über dem Sicherungszapfen 8 zu liegen kommt und hierdurch das Dachteil 6 in seiner niedergedrückten Position festgehalten ist. Die Verriegelungseinrichtung 7 nimmt dann ihre Verriegelungsstellung ein.

Bei geöffneter Fahrertür 2 ist das Betätigungsteil sowie der Betätigungshebel 5 der Verriegelungseinrichtung 7 zugänglich, und durch eine entsprechende Beaufschlagung wird hierbei das Verriegelungsteil 15 entgegen der Wirkung der Kraft der Feder 16 zurückgezogen, so daß das Verriegelungsteil 15 von dem Sicherungszapfen 8 freikommt. Durch die Feder 12 wird dann das Dachteil 6 geringfügig nach oben bewegt, so daß das Verriegelungsteil 15 sich wiederum unter Beaufschlagung durch die Feder 16 in Gegenrichtung bewegen kann. Das Betätigungsteil, wie der Betätigungshebel 5, liegt dann eng an dem Türrahmen im Bereich der Fahrertür 2 an, so daß die Fahrertür 2 ungehindert geschlossen werden kann. Vor dem Einsteigen und Abfahren wird das entriegelte Dachteil 6 abgenommen und gegebenenfalls im Kofferraum des Kraftfahrzeugs 1 oder an einer anderen Stelle verstaut.

Wie gezeigt, hält das Verriegelungsteil 15 der Verriegelungseinrichtung 7 das Dachteil 6 in der Verriegelungsstellung in einem gewissen niedergedrückten Zustand, so daß beispielsweise die Dichtungen 18 zwischen dem abnehmbaren Dachteil 6 und der festen Dachfläche 11 zuverlässig angedrückt werden.

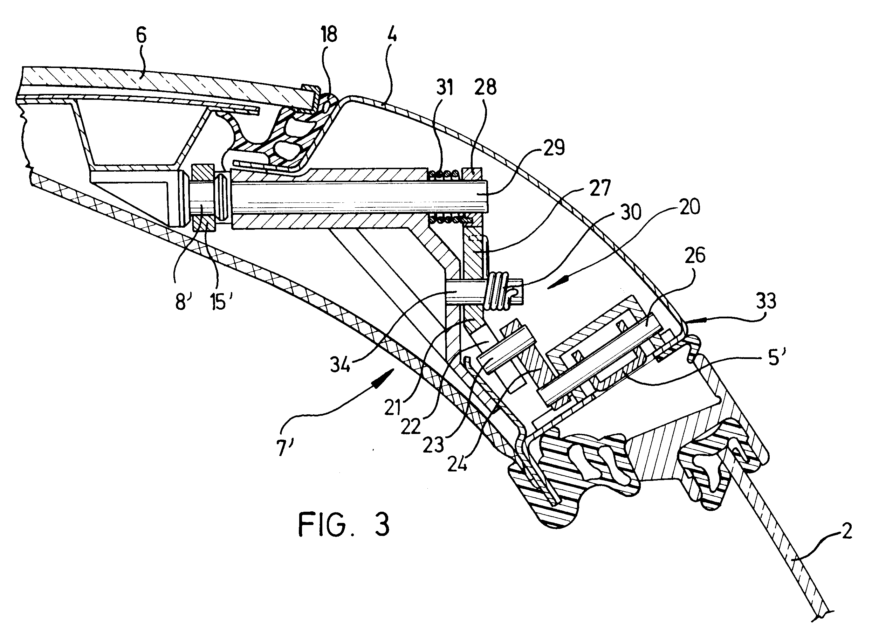

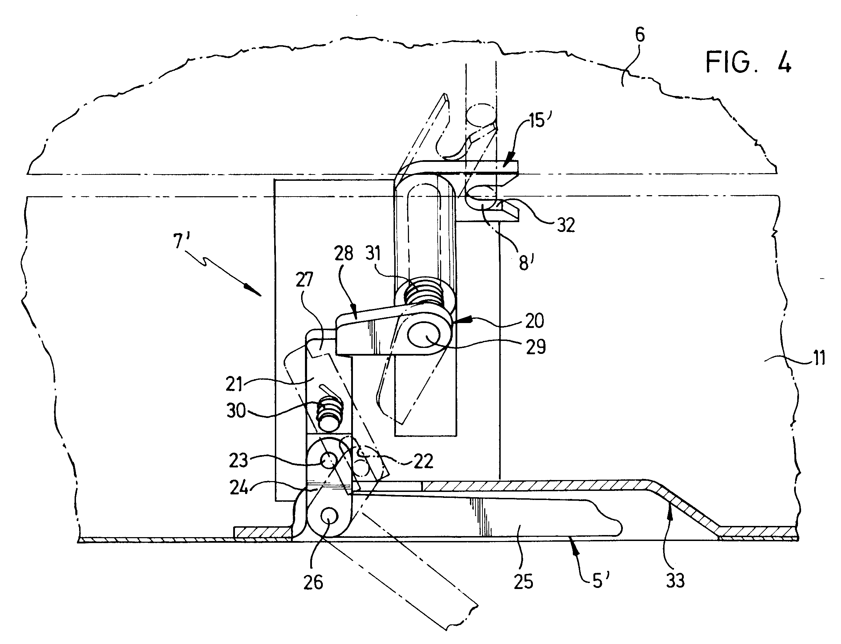

Anhand den Fig. 3 und 4 wird eine weitere bevorzugte Ausführungsform einer insgesamt dort mit 7' bezeichneten Verriegelungseinrichtung näher erläutert. Gleiche oder übereinstimmende Teile mit den vorangehend beschriebenen Figuren sind mit denselben Bezugszeichen versehen und brauchen daher nicht nochmals näher erläutert zu werden.

Die Verriegelungseinrichtung 7' umfaßt einen Betätigungshebel 5', welcher wie voranstehend erläutert im Bereich des Türrahmens der Fahrertür 2 beispielsweise angeordnet ist. Der Betätigungshebel 5' ist über eine Hebelverbindung 20 mit einem Verriegelungsteil 15' verbunden. Die Hebelverbindung 20 ist als zweigliedrige Hebelverbindung ausgelegt. Die Hebelverbindung 20 umfaßt ein Zwischenglied 21, welches an einem Ende über ein Langloch 22 und einen Zapfen 23 mit dem Betätigungshebel 5' bewegungsverbunden ist. Der Betätigungshebel 5' ist L-förmig ausgebildet, wobei der kurze Schenkel 24 den Zapfen 23 trägt, welcher in das Langloch 22 des Zwischenglieds 21 eingreift. Der längere Schenkel 25 des Betätigungshebels 5' dient als Betätigungshandhabe. Der Betätigungshebel 5' ist im Übergangsbereich von kurzem Schenkel 24 zu längerem Schenkel 25 um eine karosseriefeste Drehachse 26 drehbar bzw. verschwenkbar gelagert. Das vom Betätigungshebel 5' abgewandte Ende 27 des Zwischenglieds 21 arbeitet mit einem weiteren Hebelteil 28 zusammen, welches das Verriegelungsteil 15' trägt, welches mit dem Sicherungszapfen 8' zusammenarbeiten kann, der am abnehmbaren Dachteil 6 fest angebracht ist. Dieses Verriegelungsteil 15' ist um eine etwa horizontale Drehachse 29 drehbar. Eine das Zwischenglied 21 beaufschlagende Feder 30 ist vorgesehen, welche das Zwischenglied 21 in Richtung der Verriegelungsstellung , die in Fig. 4 in durchgezogenen Linien dargestellt ist, vorbelastet. Dem das Verriegelungsteil 15' tragenden Hebelteil 28 ist eine Feder 31 zugeordnet, durch welche das Verriegelungsteil 15' in die in Fig. 3 oder in Fig.4 in gebrochener Linie gezeigte Entriegelungsstellung der Verriegelungseinrichtung 7' vorbelastet wird.

Nachstehend wird die Funktionsweise dieser Verriegelungseinrichtung 7' anhand von Fig. 4 in Verbindung mit Fig. 3 näher erläutert. In Fig. 4 ist in gebrochener Linie die Hebelverbindung 20 der Verriegelungseinrichtung 7' in der Entriegelungsstellung gezeigt. Das abnehmbare Dachteil 6 ist beispielsweise mit Hilfe der in Fig. 1 gezeigten Zentrierstifte 9 und Lagerbuchsen 10 so bezüglich der festen Dachfläche 11 ausgerichtet, daß der Sicherungszapfen 8' unter federnder Auflage mit Hilfe der Federn 12 die in Fig. 4 in gebrochener Linie eingetragene Lage bezüglich der festen Dachfläche 11 einnimmt. Das Verriegelungsteil 15' hat ein gabelförmig ausgenommenes Ende 32, gegen welches der Sicherungszapfen 8' zur Anlage kommt. Der Betätigungshebel 5' wird über die das Zwischenglied 21 beaufschlagende Feder 30 in der Schließstellung gehalten. Wird nun das aufgelegte Dachteil 6 und damit der Sicherungszapfen 8' von oben her mit einer Druckkraft beispielsweise von Hand beaufschlagt, führt das Verriegelungsteil 15' zusammen mit dem Hebelteil 28 eine Drehbewegung um die Drehachse 29 aus. Die abgerundete Fläche des Hebelteils 28 drückt das Zwischenglied 21 entgegen der Kraft der Feder 30 in die in gebrochener Linie dargestellte Position. Am Ende dieser Bewegung schnappt das Zwischenglied 21 in die in durchgezogener Linie dargestellte Verriegelungsstellung. Beim Entriegeln wird der Betätigungshebel 5' entgegen der Federkraft der Feder 30 von der Verriegelungsstellung in die Entriegelungsstellung gezogen, bis das Zwischenteil 21 das Hebelteil 28 freigibt. Hierbei wird einerseits das Dachteil 6 mit dem Sicherungszapfen 8' über die Feder 12 angehoben und gleichzeitig das Verriegelungsteil 15' mit dem Hebelteil 28 über die Feder 31 um die Drehachse 29 in die Entriegelungsstellung (siehe gebrochene Linien) verschwenkt.

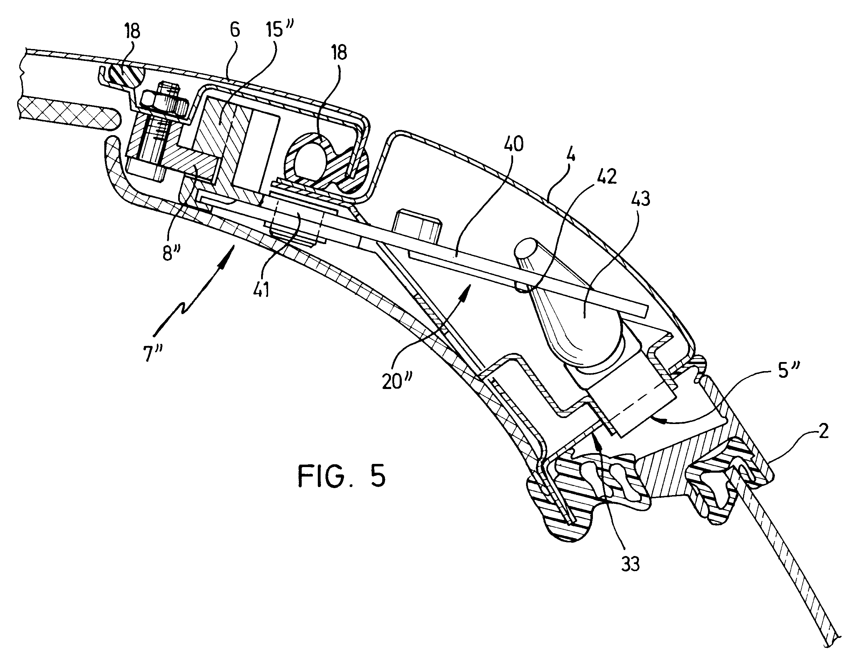

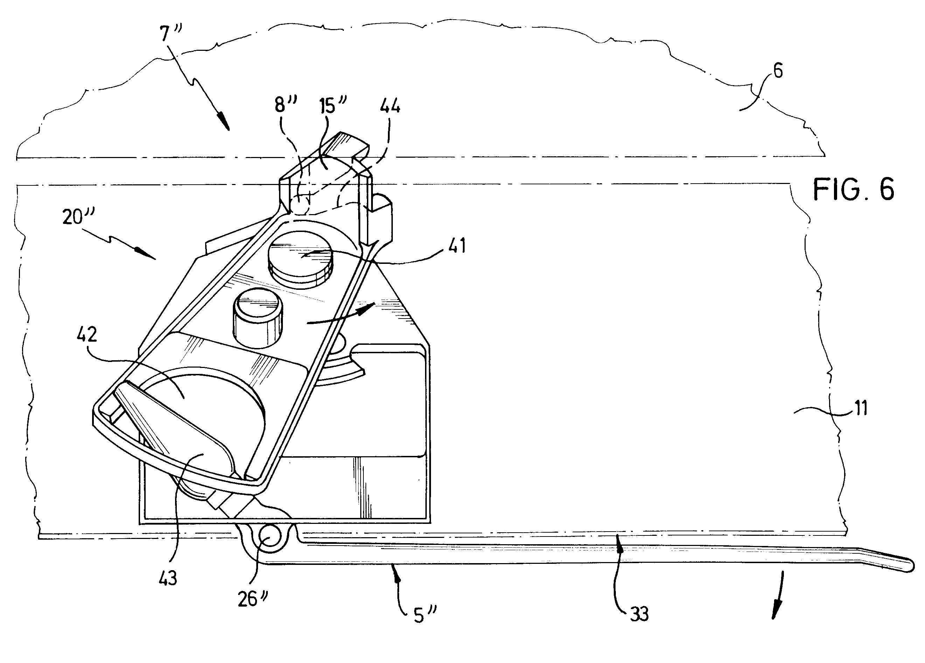

Anhand der Fig. 5 und 6 wird eine weitere bevorzugte Ausführungsform einer insgesamt mit 7'' bezeichneten Verriegelungseinrichtung erläutert. Diese Verriegelungseinrichtung 7'' hat eine Hebelverbindung 20'', welche eingliedrig ausgelegt ist. Hierbei ist ein Hebelverbindungsglied 40 vorgesehen, welches das Verriegelungsteil 15'' an einem Ende trägt und um eine Drehachse 41 drehbar ist. Wie insbesondere aus Fig. 6 zu ersehen ist, hat das Hebelverbindungsglied 40 an seinem dem Betätigungshebel 5'' zugewandten Ende eine große Öffnung 42, in welcher ein Kurvenkörper 43 eine Abwälzbewegung ausführt. Dieser Kurvenkörper 43 ist am Betätigungshebel 5'' fest angebracht, und der Betätigungshebel 5'' ist um eine karosseriefeste Achse 26'' drehbar. Wenn der Betätigungshebel 5'' um die karosseriefeste Drehachse 26'' gedreht wird, wälzt sich der als Nocke dienende Kurvenkörper 43 in der Öffnung 42 derart ab, daß das Hebelverbindungsglied 40 beispielsweise in die in Fig. 6 mit einem Pfeil angedeutete Richtung um die Drehachse 41 des Hebelverbindungsgliedes 40 gedreht wird. Das Verriegelungsteil 15'' hat eine Nockenfläche 44, welche mit dem Sicherungszapfen 8'' zusammenarbeitet. In der in Fig. 6 mit durchgezogener Linie dargestellten Verriegelungsstellung der Verriegelungseinrichtung 7'' ist der Sicherungszapfen 8'' von der Nockenfläche 44 des Verriegelungsteils 15'' teilweise umgriffen und liegt in etwa im Bereich der tiefsten Stelle im Kurvenbereich der Nockenfläche 44. Wenn ausgehend von der Verriegelungsstellung der Verriegelungseinrichtung 7'' der Betätigungshebel 5'' in Richtung des angedeuteten Pfeils um die karosseriefeste Drehachse 26 gedreht wird, wird das Hebelverbindungsglied 40 in die mit einem Pfeil angedeutete Richtung bewegt, so daß der Sicherungszapfen 8'' am Mündungsende der Nockenfläche 44 des Verriegelungsteils 15'' zu liegen kommt. Die Verriegelungseinrichtung 7'' nimmt dann ihre entriegelte Stellung ein und das abnehmbare Dachteil 6 kann von der festen Dachfläche 11 abgehoben werden.

Wenn das abnehmbare Dachteil 6 wiederum am Kraftfahrzeug 1 angebracht werden soll, wird es, wie vorangehend bereits erläutert worden ist, mit Hilfe der entsprechenden Einrichtungen zuerst zur festen Dachfläche 11 ausgerichtet. Dann liegt der Sicherungszapfen 8'' etwa im Mündungsöffnungsbereich der Nockenfläche 44 des Verriegelungsteils 15'' am Hebelverbindungsglied 40. Nunmehr wird der Betätigungshebel 5'' entgegen der in Fig. 6 dargestellten Pfeilrichtung um die karosseriefeste Drehachse 26'' in Richtung auf den Fahrzeugrahmen 33 gedreht, wobei der Kurvenkörper 43 das Hebelverbindungsglied 40 um die Drehachse 41 in die in Fig. 6 gezeigte Verriegelungsstellung dreht, wobei der Sicherungszapfen 8'' mittels der Nockenfläche 44 des Verriegelungsteils 15'' mitgenommen und hierdurch das Dachteil 6 gegen die feste Dachfläche 11 angedrückt wird. Wenn der Betätigungshebel 5'' die in den Fig. 5 und 6 gezeigte Endlage in der Verriegelungsstellung einnimmt, kann beispielsweise die Fahrertür 2 nach Fig. 1 ungehindert geschlossen werden.

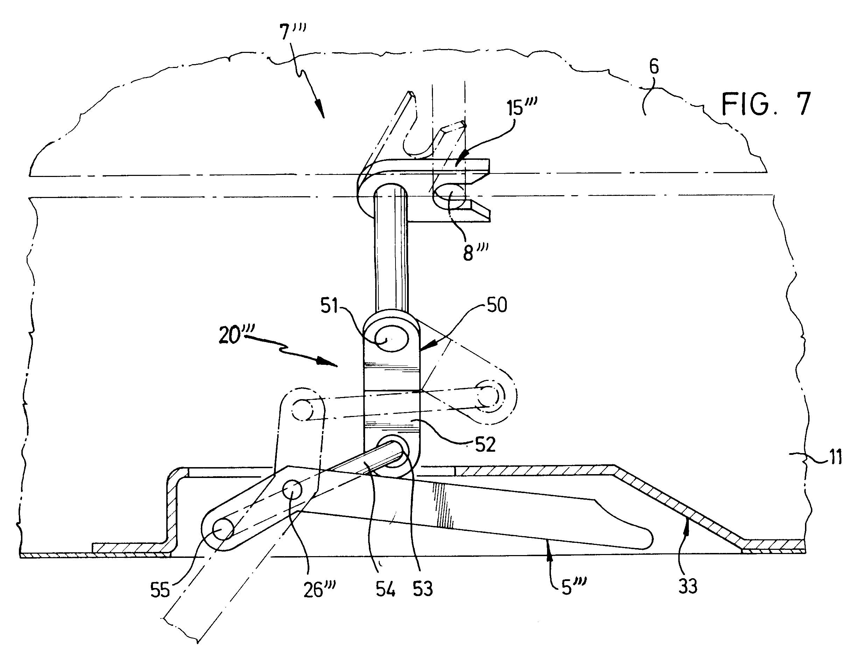

Fig. 7 zeigt eine weitere Ausführungsform einer insgesamt mit 7''' bezeichneten Verriegelungseinrichtung. Die Hebelverbindung 20''' hat ein Exzenterverbindungsglied 50, das um eine Drehachse 51 drehbar ist. Das Exzenterverbindungsglied 50 hat einen Exzenteransatz 52, welcher eine Öffnung 53 besitzt, in der eine Verbindungsstange bzw.ein Bolzen 54 drehbar gelagert ist, dessen anderes Ende ebenfalls drehbar in einer Öffnung 55 des Betätigungshebels 5''' gelagert ist. Der Betätigungshebel 5''' ist um eine karosseriefeste Drehachse 26''' drehbar. Das Verriegelungsteil 15''' der insgesamt mit 7''' in Fig. 7 verdeutlichten Verriegelungseinrichtung ist ösenförmig ausgebildet und wird von dem anderen Ende des Exzenterverbindungsgliedes 50 getragen. Dieses Verriegelungsteil 15''' hat eine gabelförmige Ausnehmung, welche mit dem Sicherungszapfen 8''' zusammenarbeiten kann.

In Fig. 7 ist in durchgezogener Linie die Verriegelungsstellung der Verriegelungseinrichtung 7''' und mit gebrochener Linie die Entriegelungsstellung derselben verdeutlicht. Durch die exzentrische Verbindung des Exzenteransatzes 52 über den Bolzen 54 mit dem Betätigungshebel 5''' gegenüber der Drehachse 51 des Exzenterverbindungsgliedes 50 wird das Verriegelungsteil 15''' in die Verriegelungsstellung und/oder Entriegelungsstellung gebracht. Selbstverständlich kann die Hebelverbindung 20''' nach Fig. 7 noch mit entsprechenden Vorbelastungsfedern versehen sein, welche derart angeordnet sind, daß das Verriegelungsteil 15''' unter Federvorbelastung in der Entriegelungsstellung (in gebrochener Linie dargestellte Stellung in Fig. 7) gehalten wird. Beim Betätigen des Betätigungshebels 5''' von der Entriegelungs- zu der Verriegelungsstellung bewegt sich der Bolzen 54 mehr und mehr in Richtung der Drehachse 26'''. Dadurch werden die Kraftverhältnisse zunehmend so verändert, daß die benötigte Handkraft am Betätigungshebel 5''' abnimmt und schließlich der Bolzen 54 den "Totpunkt" bei der Drehachse 26''' überschreitet. Dadurch wird der Betätigungshebel 5''' in seine endgültige Schließstellung gezogen( Fig.7. durchgezogene Linien).

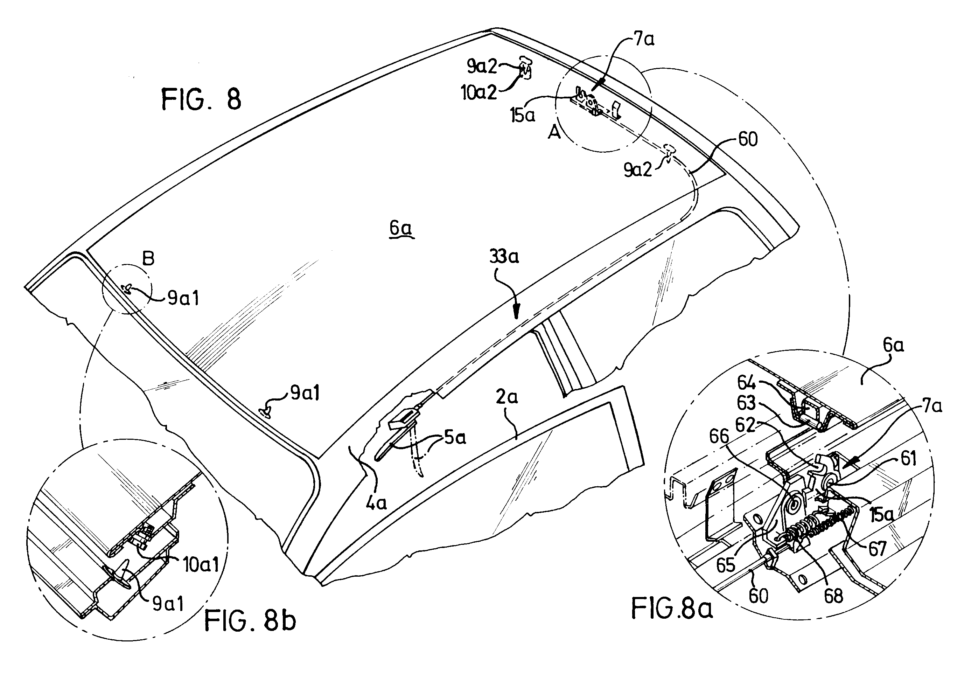

Unter Bezugnahme auf die Fig. 8, 8a und 8b wird eine weitere bevorzugte Ausgestaltungsform einer Dachanordnung nach der Erfindung näher erläutert. Hierbei sind gleiche oder ähnliche Teile wie bei den voranstehend beschriebenen Ausführungsformen zur Verdeutlichung mit denselben Bezugszeichen versehen, haben aber zur Unterscheidung den Zusatz "a". Die weitgehend mit den voranstehend beschriebenen Ausführungsformen übereinstimmenden Teile werden nochmals gesondert lediglich im Hinblick auf die wesentlichen Unterschiede zur Verdeutlichung dieser Ausführungsvariante - soweit zum Verständnis erforderlich - erläutert. Ein Betätigungshebel 5a ist beispielsweise im vorderen Bereich der Fahrertür 2a so angeordnet, daß er - wie dargestellt - nur zugänglich ist, wenn die Fahrertür 2a offen ist. Ferner läßt sich die Fahrertür 2a nur ordnungsgemäß und vollständig schließen, wenn der Betätigungshebel 5a seine in durchgezogener Linie in Fig. 8 verdeutlichte Schließstellung einnimmt. Der hinteren Querseite des abnehmbaren Dachteils 6a ist eine insgesamt mit 7a bezeichnete Verriegelungseinrichtung zugeordnet, deren nähere Einzelheiten nachstehend im Zusammenhang mit Fig. 8a erläutert werden. Zur Wirkverbindung von Verriegelungseinrichtung 7a und Betätigungshebel 5a ist ein bowdenzugförmiges Verbindungsteil 60 vorgesehen, welches zweckmäßigerweise durch den Dachholm 4a durchgeführt ist und sowohl mit dem Betätigungshebel 5a als auch mit der Verriegelungseinrichtung 7a verbunden ist.

Zur Positionierung des abnehmbaren Dachteils 6a sind nach den Fig. 8 und 8b einerseits Positionierzapfen, d.h. Zentrierstifte 9a1 an der vorderen Querseite und andererseits Zentrierstifte 9a2 im Bereich der hinteren Querseite angeordnet. Diese Zentrierstifte 9a1 und 9a2 arbeiten mit zugeordneten Lagerbuchsen 10a1 und 10a2 jeweils am abnehmbaren Dachteil 6a oder an einem karosseriefesten Teil der Dachkonstruktion zusammen, wenn das abnehmbare Dachteil 6a in seine in Fig. 8 dargestellte, bestimmungsgemäße Schließposition eingesetzt ist.

In Fig. 8a sind nähere Einzelheiten der Verriegelungseinrichtung 7a verdeutlicht. Die Verriegelungseinrichtung 7a umfaßt ein plattenförmiges Verriegelungsteil 15a, welches etwa senkrecht zur Dachebene karosseriefest um eine Achse 61 drehbar gelagert ist. Das Verriegelungsteil 7a hat eine gabelförmige Aussparung 62, welche bei der Ver- und Entriegelung der Verriegelungseinrichtung 7a mit einem Sicherungsglied 63 zusammenarbeitet, welches am abnehmbaren Dachteil 6a angebracht ist. Dieses Sicherungsglied 63 ist - wie aus Fig. 8a zu ersehen ist - in Form eines Bolzens ausgelegt, welcher am abnehmbaren Dachteil 6a derart angebracht ist, daß hinter demselben ein Freiraum 64 vorhanden ist. Ferner umfaßt die Verriegelungseinrichtung 7a eine Sperrklaue 65, welche um eine zur Achse 61 parallele Achse 66 drehbar ist, und welches mittels einer Feder 67 in die Verrastungsstellung vorbelastet ist, in welcher die Sperrklaue 65 in formschlüssigem Eingriff mit dem Verriegelungsteil 15a ist.

Nachstehend wird das Grundprinzip der Funktionsweise der anhand den Fig. 8, 8a und 8b gezeigten Ausführungsform näher erläutert.

Wenn, wie in Fig. 8a gezeigt, das abnehmbare Dachteil 6a aufgesetzt wird und die Zentrierstifte 9a1, 9a2 mit den zugeordneten Lagerbuchsen 10a1, 10a2 in Formschlußeingriff sind, hat das Sicherungsglied 63 einen gewissen kleinen Abstand zum Verriegelungsteil 15a der Verriegelungseinrichtung 7a, wie dies insbesondere aus Fig. 8a zu ersehen ist. Nunmehr wird das abnehmbare Dachteil 6a niedergedrückt, wobei der Bolzen des Sicherungsgliedes 63 in die gabelförmige Aussparung 62 des Verriegelungsteils 15a in Eingriff kommt und dieses entgegen seiner Federvorbelastung in Fig. 8a in Gegenuhrzeigerrichtung um die Achse 61 dreht. Das abnehmbare Dachteil 6a wird so weit niedergedrückt, daß das Verriegelungsteil 15a so weit verdreht ist, daß die Sperrklaue 65 eine Verrastung des Verriegelungsteils 15a vornimmt und somit die Verriegelungseinrichtung 7a ihre Verriegelungsstellung einnimmt. Der Betätigungshebel 5a wurde zuvor in die mit durchgezogener Linie in Fig. 8 gezeigte Lage gebracht, so daß dann die Fahrertür 2a geschlossen werden kann.

Wenn das abnehmbare Dachteil 6a abgenommen werden soll, so muß hierzu der Fahrer die Fahrertür 2a öffnen, um einen Zugang zu dem Betätigungshebel 5a zu haben. Wird der Betätigungshebel 5a wie in gebrochenen Linien in Fig. 8 dargestellt betätigt, so wird über bowdenzugförmige Teil 60 die Sperrklaue 65 von ihrem Formschlußeingriff mit dem Verriegelungsteil 15a ausgerückt, und das Verriegelungsteil 15a gelangt in die in Fig. 8a verdeutliche Entriegelungsstellung oder Freigabestellung durch die Wirkung der Feder 68 und wird um seine Achse 61 in Uhrzeigerrichtung in Fig., 8a so weit verdreht, daß nunmehr das abnehmbare Dachteil 6a abgenommen werden kann, indem das Sicherungsglied 63 am abnehmbaren Dachteil 6a aus der gabelförmigen Aussparung 62 der Verriegelungseinrichtung 7a herausgehoben wird.

Obgleich nicht näher dargestellt ist, können anstelle einer Verriegelungseinrichtung 7a auch zwei oder mehrere Verriegelungseinrichtungen vorgesehen sein, welche in einer Motorhaubenverriegelung ausgelegt sind. Mit Hilfe des bowdenzugförmigen Teils 60 wird dann eine zentrale Betätigung aller Verriegelungseinrichtungen 7a über einen einzigen Betätigungshebel 5a ermöglicht.

Obgleich voranstehend bevorzugte Ausführungsformen von Verriegelungseinrichtungen 7, 7', 7'' und 7''', 7a erläutert wurden,ist die Erfindung natürlich nicht auf die in diesem Zusammenhang angegebenen Einzelheiten beschränkt, sondern es sind zahlreiche Abänderungen und Modifikationen möglich, die der Fachmann im Bedarfsfall treffen wird, ohne den Erfindungsgedanken zu verlassen. Insbesondere braucht der Betätigungshebel 5, 5', 5'', 5''', 5a nicht notwendigerweise an der in den Figuren verdeutlichten Stelle im Kraftfahrzeug 1 angeordnet zu sein. Wesentlich hinsichtlich der Anordnung des Betätigungshebels 5, 5', 5'', 5''',5a ist es aber, daß das Fahrzeug nur dann in Betrieb genommen werden kann, wenn bei aufgesetztem Deckelteil 6, 6a, die Verriegelungseinrichtung 7, 7', 7'', 7''', 7a zuverlässig in der jeweiligen Verriegelungsstellung ist, wobei insbesondere die Anordnung derart gewählt sein soll, daß ein die Fahrzeugseitenöffnung verschließendes Teil, wie die Fahrertür 2, 2a, nicht in seine Schließlage gebracht werden kann, wenn der Betätigungshebel 5,5',5'',5''',5a nicht seine vorbestimmte Verriegelungsstellung einnimmt. Ferner soll der Betätigungshebel 5, 5', 5'', 5''',5a auch derart angeordnet sein, daß er nicht ohne weiteres vom Fahrzeuginnenraum her bei fahrendem Fahrzeug zugänglich ist. Hierdurch läßt sich ein unbeabsichtigtes Lösen der Verriegelungseinrichtung 7, 7', 7'', 7''', 7a während der Fahrt in Fahrzeugs vermeiden, um dem Kraftfahrzeug 1 mit einem abnehmbaren Dachteil 6,6a eine bessere Verkehrssicherheit im Hinblick auf das abnehmbare Dachteil 6 ,6a zu verleihen. Selbstverständlich können auch mehr als zwei Verriegelungseinrichtungen 7,7',7'',7''',7a an jeweils im Sinne der Erfindung geeigneten Stellen angeordnet werden. Die Anzahl der Verriegelungseinrichtungen 7,7',7'',7''',7a hängt im wesentlichen von der Größe des abnehmbaren Dachteils 6, 6a ab.

### Bezugszeichen

- 1: Kraftfahrzeug insgesamt
- 2: Fahrertür
- 3: Beifahrertür
- 4: Dachholm
- 5,5',5'',5''',5a: Betätigungshebel
- 6,6a: abnehmbares Dachteil
- 7,7',7'',7''',7a: Verriegelungseinrichtung
- 8,8',8'',8''': Sicherungszapfen
- 9,9a1,9a2: Zentrierstifte
- 10,10a1,10a2: Lagerbuchsen
- 11: Feste Dachfläche
- 12: Federn (belasten abnehmbares Dachteil 6 in Öffnungsrichtung vor)
- 13: Seitenscheibe
- 14: Dachöffnung
- 15,15',15'',15''',15a: Verriegelungsteil
- 16: Feder
- 17: Schrägfläche
- 18: Dichtungen
- 20,20',20'',20''': Hebelverbindung insgesamt
- 21: Zwischenglied
- 22: Langloch
- 23: Zapfen
- 24: Kürzerer Schenkel von 5'
- 25: Längerer Schenkel von 5'
- 26,26'',26''': Karosseriereste Drehachse
- 27: Oberes Ende von Zwischenglied 21
- 28: Hebelteil mit Verriegelungsteil 15'
- 29: Drehachse des Hebelteils 28
- 30: Feder aus Zwischenglied 21 wirkend
- 31: Feder auf Hebelteil 28 wirkend
- 32: Ösenförmig ausgenommenes Ende
- 33 , 33a: Fahrzeugrahmen
- 34: Drehachse von Zwischenglied
- 40: Hebelverbindungsglied
- 41: Drehachse
- 42: Öffnung
- 43: Kurvenkörper
- 44: Nockenfläche
- 50: Exzenterverbindungsglied
- 51: Drehachse
- 52: Exzenteransatz
- 53: Öffnung des Exzenteransatzes 52
- 54: Bolzen
- 55: Öffnung in Betätigungshebel 5'''
- 60: bowdenzugförmiges Verbindungsteil
- 61: Achse von Verriegelungsteil 15a
- 62: gabelförmige Aussparung
- 63: Sicherungsglied an abnehmbarem Dachteil 6a
- 64: Freiraum
- 65: Sperrklaue
- 66: Achse von Sperrklaue 65
- 67: Feder zur Beaufschlagung von Sperrklaue 65
- 68: Feder zur Beaufschlagung von Verriegelungsteil 15a

## Patentansprüche

1. Dachanordnung für ein Kraftfahrzeug (1) mit einem abnehmbaren Dachteil (6) zum Freilegen einer Dachöffnung (14), mit wenigstens einer karosseriefesten Aufnahmeeinrichtung (10), in die ein fest mit dem abnehmbaren Dachteil (6) verbundenes Steckteil (9) einführbar ist, und mit einer einen Betätigungshebel (5, 5', 5'', 5''') umfassenden Verriegelungseinrichtung (7, 7', 7'', 7'''), welche in Entriegelungsstellung federbelastet ist und in der Verriegelungsstellung einen am abnehmbaren Dachteil (6) vorgesehenen Sicherungszapfen (8, 8', 8'', 8''') sichert, dadurch gekennzeichnet, daß der karosseriefest am Fahrzeugrahmen (33) angeordnete Betätigungshebel (5, 5', 5'', 5''') nur zugänglich ist, wenn wenigstens ein eine Fahrzeugseitenöffnung verschließendes Teil (2, 3) in seiner Offenstellung ist, und daß sich das eine Fahrzeugseitenöffnung verschliessende Teil (2, 3) nur in seine Schließstellung bringen laßt, wenn die Verriegelungseinrichtung (7, 7', 7'', 7''') in ihrer vorbestimmten Verriegelungsstellung ist.

2. Dachanordnung für ein Kraftfahrzeug nach Anspruch 1, dadurch gekennzeichnet, daß das eine Fahrzeugseitenöffnung verschließende Teil eine Fahrzeugtüre (2, 3) ist.

3. Dachanordnung für ein Kraftfahrzeug nach Anspruch 1 oder 2 dadurch gekennzeichnet, daß das Verriegelungsteil (15) nur eine Längsbewegung ausführt.

4. Dachanordnung für ein Kraftfahrzeug nach Anspruch 1 oder 2 dadurch gekennzeichnet, daß der Betätigungshebel (5', 5'', 5''') über eine Hebelverbindung (20, 20'', 20''') mit dem Verriegelungsteil (15, 15'', 15''') derart verbunden ist, daß bei einer Drehbewegung des Betätigungshebels (5', 5'', 5''') um seine Drehachse (26, 26'', 26''') das Verriegelungsteil (15', 15'', 15''') zur Verriegelung mit dem am abnehmbaren Dachteil (6) vorgesehenen Sicherungszapfen (8', 8'', 8''') eine Drehbewegung um eine Drehachse (29, 41, 51) ausführt, die in einem Winkel zur Drehachse (26, 26'', 26''') des Betätigungshebels (5' 5'', 5''') liegt.

5. Dachanordnung für ein Kraftfahrzeug nach Anspruch 4, dadurch gekennzeichnet, daß das Verriegelungsteil (15' , 15'', 15''') ausschließlich eine Drehbewegung um seine Drehachse (29; 41; 51) ausführt.

6. Dachanordnung für ein Kraftfahrzeug nach Anspruch 4 oder 5, dadurch gekennzeichnet, daß die Hebelverbindung (20) zweigliedrig ausgelegt ist.

7. Dachanordnung für ein Kraftfahrzeug nach Anspruch 4 oder 5, dadurch gekennzeichnet, daß die Hebelverbindung (20'', 20''') eingliedrig ausgelegt ist.

8. Dachanordnung für ein Kraftfahrzeug nach Anspruch 6, dadurch gekennzeichnet, daß die Hebelverbindung (20) ein Zwischenglied (21) umfaßt, welches ein das Verriegelungsteil (15') tragendes Hebelglied (28) derart beaufschlagt, daß das Kebelglied (28) mit dem Verriegelungsteil (15') in seiner Verriegelungsstellung gehalten ist.

9. Dachanordnung für ein Kraftfahrzeug nach Anspruch 8, dadurch gekennzeichnet, daß das Zwischenglied (21) in Verriegelungsrichtung federbelastet (30) ist.

10. Dachanordnung für ein Kraftfahrzeug nach Anspruch 8 oder 9, dadurch gekennzeichnet, daß das Zwischenglied (21) eine translatorische Bewegung ausführt.

11. Dachanordnung für ein Kraftfahrzeug nach Anspruch 8 oder 9 , dadurch gekennzeichnet, daß das Zwischenglied (21) eine Drehbewegung um eine etwa zur Verriegelungselement-Drehachse (29) parallele Drehachse (34) ausführt.

12. Dachanordnung für ein Kraftfahrzeug nach einem der Ansprüche 8 bis 11, dadurch gekennzeichnet, daß der Betätigungshebel (5') L-förmig ausgebildet ist und der kürzere Schenkel (24') des L einen Zapfen (23) trägt, welcher in ein Langloch (22) im Zwischenglied (21) eingreift und das Zwischenglied (21) in Verriegelungsrichtung oder in Entriegelungsrichtung beaufschlagt.

13. Dachanordnung für ein Kraftfahrzeug nach Anspruch 7, dadurch gekennzeichnet, daß das Hebelverbindungsglied (40) einerseits das Verriegelungsteil (15'') tragt und andererseits über eine Wälzverbindung mit dem Betätigungshebel ( 5'') derart zusammenarbeitet, daß bei einer Drehbewegung des Betätigungshebels (5'') um seine Drehachse (26'') dieser das Hebelverbindungsglied (40) zur Ausführung einer Drehbewegung um seine Hebelverbindungsglied-Drehachse (41) in Verriegelungsrichtung beaufschlagt.

14. Dachanordnung für ein Kraftfahrzeug nach Anspruch 13, dadurch gekennzeichnet, daß der Betätigungshebel (5'') an seinem mit dem Hebelverbindungsglied (40) zusammenarbeitenden Ende einen als Nocke dienenden Kurvenkörper (43) hat, der sich unter Mitnahme des Hebelverbindungsgliedes (40) an diesem abwälzt.

15. Dachanordnung für ein Kraftfahrzeug nach Anspruch 13 oder 14, dadurch gekennzeichnet, daß das Verriegelungsteil (15'') eine Nockenfläche (44) aufweist, welche den am abnehmbaren Dachteil (6) vorgesehenen Sicherungszapfen (8'') in die Verriegelungsstellung bringt.

16. Dachanordnung für ein Kraftfahrzeug nach Anspruche 1, 2 oder 6, dadurch gekennzeichnet, daß die Hebelverbindung (20''') ein Extenterverbindungsglied (50) umfaßt.

17. Dachanordnung für Kraftfahrzeug nach Anspruch 16, dadurch gekennzeichnet, daß das Exzenterverbindungsglied ( 50) einen Exzenteransatz (52) hat, der über einen Bolzen (54) und eine Öffnung (55) mit dem Betätigungshebelende (5''') verbunden ist.

18. Dachanordnung für ein Kraftfahrzeug nach Anspruch 16 oder 17, dadurch gekennzeichnet, daß das Verriegelungsteil (15, 15', 15'', 15''') von einem den Sicherungszapfen (8, 8', 8'', 8''') am abnehmbaren Dachteil (6) wenigstens teilweise umgreifenden Gabelende des Hebelverbindungsgliedes ( 20. 20', 20'', 20 ''') gebildet wird.

19. Dachanordnung für ein Kraftfahrzeug nach einem der vorangehenden Ansprüche, dadurch gekennzeichnet, daß das abnehmbare Dachteil (6) in Öffnungsrichtung federvorbelastet (12) an der Karosserie (11) abgestützt ist.

20. Dachanordnung für ein Kraftfahrzeug nach einem der vorangehenden Ansprüche, dadurch gekennzeichnet, daß jeder Längsseite des abnehmbaren Dachteils (6) wenigstens eine Verriegelungseinrichtung (7, 7', 7'', 7''') zugeordnet ist.

21. Dachanordnung nach einem der Ansprüche 1 bis 3, dadurch gekennzeichnet, daß der Betätigungshebel (5a) durch ein bowdenzugförmiges Verbindungsteil (60) mit der wenigstens einen Verriegelungseinrichtung (7a) verbunden ist.

22. Dachanordnung nach Anspruch 21, dadurch gekennzeichnet, daß nur eine Verriegelungseinrichtung (7a) der Querseite des abnehmbaren Dachteils (6a) zugeordnet ist, während der Betätigungshebel (5a) im Türbereich des Fahrzeugrahmens (33a) angeordnet ist.

23. Dachanordnung nach Anspruch 21 oder 22, dadurch gekennzeichnet, daß über den Betätigungshebel (5a) und das biegesteife Kabel (60) die Verriegelungseinrichtung (7a) in ihre Entriegelungsstellung bringbar ist, während die Verriegelungseinrichtung (7a) ohne Hebelbetätigung in ihre Verriegelungsstellung bringbar ist.

24. Dachanordnung nach einem der Ansprüche 21 bis 23, dadurch gekennzeichnet, daß die Verriegelungseinrichtung (7a) ein Verriegelungsteil (15a) mit einer gabellochförmigen Aussparung (62) umfaßt, welche das dachseitige Sicherungsglied (63) in der Verriegelungsstellung umgreift, und das eine Drehbewegung um eine zur Ebene des Verriegelungsteils (15a) senkrechte Achse (61) zur Ver- oder Entriegelung ausführt.

25. Dachanordnung nach Anspruch 24, dadurch gekennzeichnet, daß eine Sperrklaue (65) mit dem Verriegelungsteil (15a) derart zusammenarbeitet, daß das Verriegelungsteil (15a) in seiner das Sicherungsglied (63) niederhaltenden Verriegelungsstellung formschlüssig verrastet ist.

26. Dachanordnung nach Anspruch 24 oder 25, dadurch gekennzeichnet, daß das bowdenzugförmige Teil (60) mit der Sperrklaue (65) zum Lösen des Verrastungseingriffes mit dem Verrriegelungsteil(15 a) verbunden ist.

27. Dachanordnung nach Anspruch 25 oder 26, dadurch gekennzeichnet, daß die Sperrklaue (65) in ihrer Verrastungsstellung federbelastet ist.

28. Dachanordnung nach einem der Ansprüche 21 bis 27, dadurch gekennzeichnet, daß die Verriegelungseinrichtung (7a) ähnlich einer Motorhaubenverriegelung ausgelegt ist.

## Claims

1. A roof arrangement for a motor vehicle (1) with a removable roof part (6) to expose a roof opening (14), with, rigid with the body, at least one seating arrangement (10) into which it is possible to insert a peg part (9) which is rigidly connected to the removable roof part (6) and with, comprising an actuating lever (5, 5', 5'', 5'''), a locking means (7, 7', 7'', 7''') which is spring-loaded when in the release position and which, when in the locked position, secures a locking pin (8, 8', 8'', 8''') provided on the removable roof part (6), characterised in that the actuating lever (5, 5', 5'', 5''') disposed rigidly on the vehicle frame (33) is only accessible when at least one part (2, 3) which closes off the opening on the vehicle side is in its open position and in that the part (2, 3) which closes off an aperture on the vehicle side can only be moved into its closed position when the locking means (7, 7', 7'', 7''') is in its predetermined locked position.

2. A roof arrangement for a motor vehicle according to Claim 1, characterised in that the part which closes off an aperture on the vehicle side is a vehicle door (2, 3).

3. A roof arrangement for a motor vehicle according to Claim 1 or 2, characterised in that the locking part (15) only performs a longitudinal movement.

4. A roof arrangement for a motor vehicle according to Claim 1 or 2, characterised in that the actuating lever (5', 5'', 5''') is connected by a lever connection (20, 20'', 20''') to the locking part (15, 15'', 15''') so that upon a rotary movement of the actuating lever (5', 5'', 5''') about its pivot axis (26, 26'', 26''') the locking part (15', 15'', 15''') performs a rotary movement about a pivot axis (29, 41, 51) to accomplish locking with the locking peg (8, 8'', 8''') provided on the removable roof part (6), said pivot axis (29, 41, 51) lying at an angle to the pivot axis (26, 26'', 26''') of the actuating lever (5', 5'', 5''')

5. A roof arrangement for a motor vehicle according to Claim 4, characterised in that the locking part (15', 15'', 15''') only performs a rotary movement about its pivot axis (29, 41, 51).

6. A roof arrangement for a motor vehicle according to Claim 4 or 5, characterised in that the lever connection (20) comprises two members.

7. A roof arrangement for a motor vehicle according to Claim 4 or 5, characterised in that the lever connection (20'', 20''') is of single-member design.

8. A roof arrangement for a motor vehicle according to Claim 6, characterised in that the lever connection (20) comprises an intermediate member (21) which acts upon a lever member (28) which supports the locking part (15') in such a way that the lever member (28) is maintained in its locked position by the locking part (15').

9. A roof arrangement for a motor vehicle according to Claim 8, characterised in that the intermediate member (21) is spring-loaded (30) in the locking direction.

10. A roof arrangement for a motor vehicle according to Claim 8 or 9, characterised in that the intermediate member (21) performs a translatory movement.

11. A roof arrangement for a motor vehicle according to Claim 8 or 9, characterised in that the intermediate member (21) performs a rotary movement about a pivot axis (34) which is substantially parallel with the pivot axis (29) of the locking element.

12. A roof arrangement for a motor vehicle according to one of Claims 8 to 11, characterised in that the actuating lever (5') is L-shaped, the shorter arm (24') of the L carrying a journal (23) which engages an elongated hole (22) in the intermediate member (21), acting on the intermediate member (21) in a locking direction or in a release direction.

13. A roof arrangement for a motor vehicle according to Claim 7, characterised in that the lever connecting member (40) carries the locking part (15'') on the one hand and, via a rolling connection, so cooperates with the actuating lever (5'') on the other that upon a rotary movement of the actuating lever (5'') about its pivot axis (26''), the actuating lever (5'') acts upon the lever connecting member (40) in the locking direction in order to perform a rotary movement about the pivot axis (41) of its lever connecting member.

14. A roof arrangement for a motor vehicle according to Claim 13, characterised in that the actuating lever (5'') has at its end which cooperates with the lever connecting member (40) and serving as a cam projection a cam member (43) which rolls on the lever connecting member (40) while this latter is being entrained.

15. A roof arrangement for a motor vehicle according to Claim 13 or 14, characterised in that the locking part (15'') has a cam surface (44) which moves the locking peg (8'') provided on the removable roof part (6) into the locked position.

16. A roof arrangement for a motor vehicle according to Claim 1, 2 or 6, characterised in that the lever connection (20''') comprises an eccentric connecting member (50)

17. A roof arrangement for a motor vehicle according to Claim 16, characterised in that the eccentric connecting member (50) has an eccentric projecting portion (52) which is connected to the actuating lever end (5''') via a bolt (54) and an aperture (55).

18. A roof arrangement for a motor vehicle according to Claim 16 or 17, characterised in that the locking part (15, 15', 15'', 15''') is formed by a bifurcated end of the lever connecting member (20, 20', 20'', 20''') which at least partially engages around the locking peg (8, 8', 8'', 8''') on the removable roof part (6).

19. A roof arrangement for a motor vehicle according to one of the preceding Claims, characterised in that the removable roof part (6) is supported on the bodywork (11) in such a way that it is spring-prebiased (12) in the opening direction.

20. A roof arrangement for a motor vehicle according to one of the preceding Claims, characterised in that at least one locking device (7, 7', 7'', 7''') is associated with each long side of the removable roof part (6).

21. A roof arrangement according to one of Claims 1 to 3, characterised in that the actuating lever (5a) is connected by a bowden cable-like connecting part (60) to the at least one locking device (7a).

22. A roof arrangement according to Claim 21, characterised in that only one locking device (7a) is associated with the transverse side of the removable roof part (6a) while the actuating lever (5a) is disposed in the door area of the vehicle frame (33a)

23. A roof arrangement according to Claim 21 or 22, characterised in that the locking device (7a) can be moved into its release position via the actuating lever (5a) and the flexurally rigid cable (60) while the locking device (7a) can be moved into its locked position without actuation of a lever.

24. A roof arrangement according to one of Claims 21 to 23, characterised in that the locking device (7a) comprises a locking part (15a) with a recess (62) of bifurcated shape and which engages around the roof-side locking member (63) in the locked position and which performs a rotary movement about an axis (61) at right-angles to the plane of the locking part (15a) to accomplish locking or release.

25. A roof arrangement according to Claim 24, characterised in that a catch member (65) cooperates with the locking part (15a) so that the locking part (15a) is form-lockingly engaged in its locked position in which it presses down the locking member (63).

26. A roof arrangement according to Claim 24 or 25, characterised in that the bowden cable-shaped part (60) is connected to the catch member (65) for releasing the catch engagement with the locking part (15a).

27. A roof arrangement according to Claim 25 or 26, characterised in that the catch member (65) is spring-loaded in its locking position.

28. A roof arrangement according to one of Claims 21 to 27, characterised in that the locking device (7a) is designed to be similar to an engine compartment bonnet lock.

## Revendications

1. Disposition de toiture pour un véhicule à moteur (1) avec une partie de toit que l'on peut enlever (6) pour libérer une ouverture dans le toit (14), avec au moins un dispositif de réception solidaire de la carrosserie (10), dans lequel on peut introduire une partie enfichable (9) reliée à la partie de toit que l'on peut enlever (6), et avec un dispositif de verrouillage (7, 7', 7'', 7''') entourant un levier d'actionnement (5, 5', 5'', 5''') qui est comprimé par un ressort dans une position de déverrouillage et qui bloque dans la position de déverrouillage un tenon de blocage (8, 8', 8'', 8''') prévu sur la partie de toit que l'on peut enlever (6), caractérisée en ce que le levier d'actionnement (5, 5', 5'', 5''') disposé de façon solidaire de la carrosserie sur le châssis du véhicule (33) n'est accessible que quand au moins une partie (2,3) fermant une ouverture latérale du véhicule est en position ouverte et que la partie (2,3) qui ferme une ouverture latérale du véhicule ne peut être mise dans sa position de fermeture que quand le dispositif de verrouillage (7, 7', 7'', 7''') est dans sa position de verrouillage prédéterminée.

2. Disposition de toiture pour un véhicule à moteur selon la revendication 1, caractérisée en ce qu'une partie fermant une ouverture latérale du véhicule est une porte de voiture (2, 3)

3. Disposition de toiture pour un véhicule à moteur selon la revendication 1 ou 2, caractérisée en ce que la pièce de verrouillage (15) n'exécute qu'un mouvement longitudinale.

4. Disposition de toiture pour un véhicule à moteur selon la revendication 1 ou 2, caractérisée en ce que le levier d'actionnement (5', 5'', 5''') est relié par une liaison de levier (20, 20'', 20''') à la pièce de verrouillage (15, 15', 15''') de telle façon que dans le cas d'un mouvement de rotation du levier d'actionnement (5', 5'', 5''') autour de son axe de rotation (26, 26'', 26''') la pièce de verrouillage (15', 15'', 15''') servant à verrouiller le tenon de blocage (8, 8'', 8''') prévu sur la partie du toit (6) qui peut être enlevée exécute un mouvement de rotation autour d'un axe de rotation (29, 41, 51) qui forme un certain angle par rapport à l'axe de rotation (26, 26'', 26''') du levier d' actionnement (5', 5'', 5''')

5. Disposition de toiture pour un véhicule à moteur selon la revendication 4, caractérisée en ce que la pièce de verrouillage (15', 15'', 15''') exécute exclusivement un mouvement de rotation autour de son axe de rotation (29, 41, 51).

6. Disposition de toiture pour un véhicule à moteur selon la revendication 4 ou 5, caractérisée en ce que la liaison de levier (20) est conçue en deux organes.

7. Disposition de toiture pour un véhicule à moteur selon la revendication 4 ou 5, caractérisée en ce que la liaison de levier (20'', 20''') est conçue en un seul organe.

8. Disposition de toiture pour un véhicule à moteur selon la revendication 6, caractérisée en ce que la liaison de levier (20) comprend un organe intermédiaire (21) qui sollicite un organe de levier (28) portant la pièce de verrouillage (15') de telle façon que l'organe de levier (28) est maintenu par la pièce de verrouillage (15') dans sa position de verrouillage.

9. Disposition de toiture pour un véhicule à moteur selon la revendication 8, caractérisée en ce que l'organe intermédiaire (21) est comprimé par un ressort dans le sens du verrouillage.

10. Disposition de toiture pour un véhicule à moteur selon la revendication 8 ou 9, caractérisée en ce que l'organe intermédiaire (21) exécute un mouvement de translation.

11. Disposition de toiture pour un véhicule à moteur selon la revendication 8 ou 9, caractérisée en ce que l'organe intermédiaire (21) exécute un mouvement de rotation autour d'un axe de rotation (34) à peu près parallèle à l'axe de rotation (29) de l'élément de verrouillage.

12. Disposition de toiture pour un véhicule à moteur selon l'une des revendications 8 à 11, caractérisée en ce que le levier d'actionnement (5') est constitué en forme de L et que la branche la plus courte (24') du L porte un tenon (23), qui vient en prise dans un trou longitudinal (22) dans l'organe intermédiaire (21) et sollicite l'organe intermédiaire (21) dans le sens du verrouillage ou dans le sens du déverrouillage.

13. Disposition de toiture pour un véhicule à moteur selon la revendication 7, caractérisée en ce que l'organe de liaison de levier (40) porte d'une part la pièce de verrouillage (15) et d'autre part coopère au moyen d'une liaison à rouleaux avec le levier d'actionnement (5'')de telle façon que dans le cas d'un mouvement de rotation du levier d'actionnement (5'') autour de son axe de rotation (26'') celui-ci sollicite l'organe de liaison de levier (40) pour qu'il exécute un mouvement de rotation autour de son axe de rotation (41) d'organe de liaison de levier dans le sens du verrouillage.

14. Disposition de toiture pour un véhicule à moteur selon la revendication 13, caractérisée en ce que le levier d'actionnement (5'') a, à son extrémité coopérant avec l'organe de liaison de levier (40) un corps en courbes servant de came (43) qui roule sur l'organe de liaison de levier (40) en entraînant celui-ci.

15. Disposition de toiture pour un véhicule à moteur selon la revendication 13, caractérisée en ce que la pièce de verrouillage (15'') présente une surface de came (44) qui met le tenon de verrouillage (8'') prévu sur la partie du toit qui peut être enlevée (6) dans la position de verrouillage.

16. Disposition de toiture pour un véhicule à moteur selon les revendications 1,2 ou 6, caractérisée en ce que la liaison de levier (20''') comprend un organe de liaison (50) à excentrique.

17. Disposition de toiture pour véhicule à moteur selon la revendication 6, caractérisée en ce que l'organe de liaison à excentrique (50) a un appendice excentrique (52) qui est relié par un axe (54) et un orifice e(55) à l'extrémité du levier d'actionnement (5''').

18. Disposition de toiture pour un véhicule à moteur selon la revendication 16 ou 17, caractérisée en ce que la pièce de verrouillage (15, 15',15'', 15''') est formée par l'extrémité à fourche de l'organe de liaison de levier (20, 20', 20'', 20''') enserrant le tenon de blocage (8, 8', 8'', 8''') sur la partie du toit qui peut être enlevée (6) au moins en partie.

19. Disposition de toiture pour un véhicule à moteur selon l'une des revendications précédentes, caractérisée en ce que la partie du toit qui peut être enlevée (6) s'appuie sur la carrosserie (11) en étant pré-comprimée par un ressort (12) dans le sens de l'ouverture.

20. Disposition de toiture pour un véhicule à moteur selon l'une des revendications précédentes, caractérisée en ce qu'à chaque côté longitudinal de la partie du toit (6) qui peut être enlevée est associé au moins un dispositif de verrouillage (7, 7', 7'', 7''').

21. Disposition de toiture selon l'une des revendications 1 à 3, caractérisée ne ce que le levier d'actionnement (5a) est relié par une pièce de liaison (60) ayant la forme d'un câble Bowden à l'un au moins des dispositifs de verrouillage (7a).

22. Dispositif de toiture selon la revendication 21, caractérisé en ce qu'il n'y a qu'un dispositif de verrouillage (7a) qui est associé au côté transversal de la partie de la toiture (6a) qui peut être enlevée, tandis que le levier d'actionnement (5a) est disposé dans la zone de la porte du châssis du véhicule (33a).

23. Dispositif selon la revendication 21 ou 22, caractérisé en ce que par l'intermédiaire du levier d'actionnement (5a) et du câble (60) résistant à la flexion, on peut mettre le dispositif de verrouillage (7a) dans sa position de déverrouillage, tandis que le dispositif de verrouillage (7a) peut être mis sans actionner le levier dans sa position de verrouillage.

24. Disposition de toiture selon l'une des revendications 21 à 23, caractérisée en ce que le dispositif de verrouillage (7a) comprend une pièce de verrouillage (15a) avec un évidement (62) en forme de trou de fourche, évidement qui vient en prise avec l'organe de blocage (63) du côté du toit dans la position de verrouillage et qui exécute un mouvement de rotation autour d'un axe de rotation (61) perpendiculaire au plan de la pièce de verrouillage (15a) servant à verrouiller et déverrouiller.

25. Disposition de toiture selon la revendication 24, caractérisée en ce qu'une patte de blocage (65) coopère avec la pièce de verrouillage (15a) de telle façon que la pièce de verrouillage (15a) s'encliquette par interpénétration par la forme dans sa position de verrouillage maintenant en position basse l'organe de blocage (63).

26. Disposition de toiture selon la revendication 24 ou 25, caractérisée en ce que la pièce se présentant sous la forme d'un câble Bowden (60) est reliée à la patte de blocage (65) pour libérer la prise d'encliquetage d'avec la pièce de verrouillage (15a).

27. Disposition de toiture selon la revendication 25 ou 26, caractérisée en ce que la patte de blocage (65) est comprimée par un ressort dans sa position d'encliquetage.

28. Disposition de toiture selon l'une des revendications 21 à 27, caractérisée en ce que le dispositif de verrouillage (7a) est conçu d'une manière semblable à un verrouillage de capot de moteur.
